# EUROPEAN PATENT APPLICATION

(11) **EP 2 189 277 A1**
(43) Date of publication of application: **26.05.2010**
(21) Application number: 08275075.3
(22) Date of filing: 19.11.2008
(51) Int. Cl.: B32B 3/00, D03D 13/00, D03C 7/04, D05C 17/00

(54) **Fibre reinforced composite**

(71) Applicant: BAE Systems PLC, 6 Carlton Gardens London SW1Y 5AD (GB)
(72) Inventor: The designation of the inventor has not yet been filed
(74) Representative: BAE SYSTEMS plc Group IP Department

(57) **Abstract**

A secondary ply structure suitable for incorporation into a continuous fibre reinforced composite structure comprising a matrix material and a plurality of fibre ply reinforcing structures, a continuous fibre reinforced composite material so formed, and a method for the fabrication of the same are described. The secondary ply comprises a carrier sheet for example in the form of a ply of primary fibres and carries a two dimensional plural array of secondary fibres extending outwardly of the plane of the sheet into a third dimension in generally aligned manner and disposed across at least a major part of the surface thereof in generally aligned manner to provide out of plane reinforcement in the consolidated structure.

## Description

The invention relates to a composite material comprising a plurality of plies of hollow and/ or solid fibre material combined with a suitable matrix material into a composite body, and to a method of fabrication of the same.

Composite material systems which combine two or more distinct component materials are of increasing importance to meet demands for materials possessing an array of desirable properties. Typical composite materials comprise a reinforcing material disposed in a matrix material to create a new material which combines the desirable properties of the components and/ or has properties that may not be present, or present to the same extent, in the components alone.

A significant class of composite material comprises a material with plural two-dimensional plies of fibrous reinforcing material disposed in a suitable matrix material. The plies of fibrous reinforcing material effect reinforcement in one or two dimensions, for example in that they comprise long fibres which usually substantially span the length and/ or breadth of the ply, and hence of the composite material. Suitable plies for such purposes include unidirectional tapes with parallel fibres and bidirectional sheets in which fibres are arrayed in plural directions, and may be non-woven sheets or have a woven, braided stitched or other like structure. Composite materials reinforced with relatively long fibres in this manner are usually referred to as continuous fibre reinforced composites (CFRCs) to distinguish them from short fibre reinforced.

An acknowledged inherent weakness of CFRCs reinforced with plural laminar plies of fibrous reinforcing material is interlaminar or out of plane weakness. The fibre reinforcement may bear most of the load in the plane of the fibres. As CFRCs lack fibre reinforcement out of this plane, they possess a lesser load bearing capability in this direction. As a result, CFRCs tend to exhibit relatively lower interlaminar strength and/or fracture toughness, and interlaminar failure, for example by delamination, may occur at undesirably low levels of applied stress.

To mitigate this, solutions have been offered that tie the plies together in some mechanical manner in the third dimension, for example by braiding or stitching plies together to give additional through thickness strength. Such solutions have met limited success. In particular, they can reduce in plane strength by affecting the integrity of the in plane fibre structure. Moreover, if the third dimension braiding or stitching is to be effective this tends to require the reinforcement plies themselves to have a woven or similarly integrated two dimensional architecture, whereas for many applications it might otherwise be desirable to use non-woven sheet materials or unidirectional tape.

Provision of an enhanced material structure and method of fabrication providing for reinforcement in a third, out of plane dimension in CRFCs, and in particular a structure and method that limits any detrimental effect on in plane reinforcement and/ or that is applicable to reinforcement plies with a variety of fibre structures, for example including non-woven sheets and unidirectional tape as well as woven structures, is therefore desirable.

In accordance with the present invention in a first aspect there is provided a composite structure comprising:
a matrix material; and
a plurality of fibre plies disposed substantially within the matrix material in generally parallel spaced manner; and
at least one secondary ply comprising a carrier sheet having a two dimensional plural array of secondary fibres extending outwardly of the plane of the sheet into a third dimension in generally aligned manner and disposed across at least a major part of the surface thereof.

Thus, in accordance with the invention, at least one, and preferably a plurality of, secondary plies are disposed on or in the assembled composite structure within the matrix material to act as carrier plies for a secondary reinforcement which is carried in the form of a plurality of secondary reinforcing fibres arrayed across a major part of the extent of the carrier ply, especially preferably in a generally evenly distributed array. The secondary fibres extend generally outwardly of the plane of the carrier ply. Particularly preferably, the fibres project outwardly such that at least a substantial proportion of them extend generally perpendicularly to the carrier ply in aligned manner. These provide reinforcement out of the principal reinforced plane direction of the CFRC.

The carrier ply may in principle be any suitable sheet material, for example comprising a fibre ply or a polymeric sheet. A fibre ply may also serve as a primary in plane reinforcement. A polymeric sheet may comprise a layer of curable adhesive. However, in a preferred embodiment, the carrier sheet is itself a fibre ply, and for example a fibre ply suitable for incorporation into a continuous fibre reinforced composite structure to provide a reinforcement in a direction parallel to the plane of the ply. In this embodiment at least some of the said fibre plies additionally comprise carrier plies provided with a two dimensional plural array of secondary fibres extending outwardly of the plane of the ply and disposed across at least a major part of the surface thereof.

The secondary fibres extend out of the plane of the carrier ply, and for example into the matrix in a process laminate, to effect reinforcement in the third direction out of, and for example generally perpendicular to, the plane direction of the reinforcing plies. The secondary fibres are generally aligned. However, as will be appreciated from the reinforcement principles of the invention described herein, some misalignment will be tolerated.

In accordance with the principles of the invention, the secondary fibres are distributed across a major part of a carrier ply, in particular generally evenly. Thus, a ply carrying such secondary fibre reinforcement provides a generally uniform out of plane reinforcing function across at least a major part of its area extent and confers a reinforcing effect out of the plane of the area extent in conjunction with the matrix material, in a substantially uniform manner across the major extent of the ply. This can be contrasted with arrangements where discrete areas of secondary reinforcing fibres are provided which are designed to interact with corresponding but differently formed discrete areas of an adjacent ply, for example to effect a hook and loop type engagement, and which as a result need specific and careful alignment of interacting adjacent plies so that complementary discreet areas or structures interact in the required way. In a structure making use of carrier plies in accordance with the present invention there is no need for such complex alignment between plies.

Typically, some of such carrier plies will be interleaved in a process laminate structure with layers of conventional reinforcing plies. When such carrier plies are incorporated into a composite structure as additional reinforcement in this manner, the secondary reinforcement provided by the secondary fibres is consolidated into the laminate to improve out of plane properties, and in particular to give resistance to interlaminar stresses and reduce tendency to failure by delamination.

Additionally or alternatively, especially for example in the case where a carrier ply is a sheet of curable polymer adhesive, a ply may be applied at a joint between consolidated laminates, and/or at a joint surface region during a co-bonding process.

In all such cases, the out of plane alignment of secondary fibres provided in the carrier ply complements the in plane reinforcement of the primarily reinforcing fibre plies arranged in the matrix to give additional out of plane strength, for example for areas of high delamination stress.

Preferably, secondary fibres project outwardly from both sides of a secondary ply. Particularly preferably, a secondary fibre extends through a secondary ply to so project outwardly from both sides thereof.

Preferably, a secondary fibre is inflitrated into, and for example through, the secondary carrier ply in such manner as to be retained therein, subsequently to the formation of and without forming a directly constituent part of the two dimensional secondary ply structure. This is particularly advantageous where the secondary ply is a fibre carrier ply, and the secondary fibres project through the two dimensional structure of primary fibres making up the fibre carrier ply, without being woven, stitched, tied or otherwise incorporated into, by means of modification of, the underlying structure of the primary fibres making up the fibre carrier ply. For example, the secondary fibres project into and preferably through gaps within the one or two dimensional fibre structure created by and between the primary fibres of the carrier ply and thus do not require specific modification to the structure of the primary fibres of the carrier ply.

This confers two advantages in particular. First, the principles of the invention can be employed in principle with a range of primary fibre structures, for example including bidirectional sheets having a woven, braided, stitched or non-woven structure, and unidirectional tapes. Second, since the secondary fibres are provided by infiltration in such manner that the structure of the primary fibres of the carrier ply is left essentially unmodified, the reinforcing effect in-plane of the primary fibres need not be reduced, as might be the case for example in known systems where plies of primary fibres are connected together by stitching or like means to provide out of plane properties.

Preferably, in an assembled structure comprising a plurality of secondary plies disposed substantially within a matrix material, at least some adjacent plies have secondary fibres projecting from respective opposing surfaces of each ply into the matrix material between them, and especially projecting into the matrix material to such an extent as to partly enmesh. This partial enmeshing of secondary fibres from adjacent carrier plies enhances the reinforcing effect. The complementary structures are arrayed across a major part of the opposed carrier ply surfaces, preferably generally evenly, to give a simple, uniform reinforcing effect that does not require particular alignment of the layers.

In a typical composite material structure, secondary plies carrying secondary fibres in the manner above described are interleaved in laminar manner with a plurality of conventional reinforcing fibre plies. For example, secondary plies carrying secondary fibres in the manner above described may be provided, or provided in greater proportion, in laminate structures at areas of high interlaminar stress where it is desirable to improve out of plane properties, such as a T joint between a base plate and a spar, which are known to be areas particularly prone to delamination and similar failure modes. Additionally or alternatively secondary plies carrying secondary fibres in the manner above described may provided as part of the joint interface between such laminate structures.

Preferably, the secondary fibres comprise short length fibres, which term will be understood by the skilled person as contrasting with the "continuous" fibres of the conventional reinforcing plies making up the basic CFRC structure. For example, the secondary fibres may have a mean length of between 0.25 mm and 3 mm, and more preferably between 1 mm and 1.5 mm.

The secondary fibres preferably have a mean diameter and more preferably a maximum diameter of 30 µm or less to minimise the effect on the primary fibre structure of the carrier ply when infiltrated therein. Considerations of fibre handling during fabrication might make it desirable that the secondary fibres have a mean diameter and more preferably a minimum diameter of no less than 6 µm. Fibre diameters in the range of 10 to 20 µm are particularly preferred.

In a preferred embodiment the secondary plies are fibre carrier plies. The secondary fibres are preferably sized to be introduced to infiltrate the primary fibre structure of the fibre carrier ply, and in particular to pass through this primary fibre structure and to be retained therein in an arrangement which is generally aligned in the third dimension.

Secondary fibres may be hollow or solid fibres, fabricated from any suitable material, in particular which lends itself to the provision of short strand aligned fibres. Suitable materials might include carbon fibres, for example PAN based or pitch based, glass or ceramic fibres such as silica etc.

Carrier plies carrying secondary fibre enforcement in accordance with the invention are conveniently introduced into a laminar structure at the laminating or assembly stage and are typically intercalated with conventional CFRC reinforcement plies. The carrier plies in accordance with the invention may comprise fibre plies which merely serve as scrim cloth carriers for the secondary reinforcement, or may themselves comprise CFRC reinforcement plies in conventional manner. Carrier plies in accordance with the invention carrying secondary fibres as described are introduced in particular, or introduced in greater proportion, in areas of high interlaminar stress where delamination failure is likely to be a problem, for example at interfaces, and in particular at interfaces of a T joint and/or its mating face(s) with another component, and also at surfaces.

Fibre plies according to the invention whether comprising primary reinforcement plies and/ or secondary fibre carrier plies for secondary reinforcement may comprise primary fibres of any suitable composition and structure to give in plane reinforcement in conjunction with suitable matrix material and/ or to support the secondary fibres. Composite materials comprising fibres such as carbon fibres, glass fibres and aramid fibres held in a variety of resin matrices are known for example.

For example, as will be familiar, the primary fibres making up a fibre ply layer may be unidirectional (fibres in a single orientation), the ply for example comprising unidirectional tape with parallel fibres, or multidirectional, for example including multidirectional such as bidirectional sheet in which fibres are arranged in plural directions, for example in woven, knitted, stitched, braided, non-crimp or non-woven sheet. A ply may comprise multiple overlain, connected or consolidated sheet layers. A ply may comprise plural fibre tows (groups of fibres which, in each ply, run parallel with each other). It is a particular advantage of the invention that any suitable ply may be used, and that this ply may be for example a conventional reinforcing ply such as might conventionally be used in a CFRC.

In a more complete embodiment of the present invention, a composite structure comprises a matrix material and;
a plurality of reinforcing fibre plies disposed substantially within the matrix material in generally parallel spaced manner; and, for example at areas of high interlaminar stress within the structure;
at least one secondary ply having a two dimensional plural array of secondary fibres extended outwardly of the plane of the ply and disposed across at least a major part of the surface thereof. Such a secondary ply may as above described additionally comprise a primarily reinforcing fibre ply, or may be a bespoke carrier sheet of fibrous or other constituent material.

In a particularly preferred case, the structure is a joint between two fibre reinforced laminate formations, and secondary plies comprising plural secondary fibres are provided within one or both laminate formations and/or at a surface of such a formation at least in the vicinity of the joint. For example, the joint is a butt joint such as a T joint.

In accordance with a further aspect of the invention, a secondary ply structure is provided suitable for incorporation into a continuous fibre reinforced composite structure comprising a matrix material and a plurality of primary fibre ply reinforcing structures; the secondary ply comprising a carrier sheet having a two dimensional plural array of secondary fibres extending outwardly of the plane of the sheet into a third dimension in generally aligned manner and disposed across at least a major part of the surface thereof.

In a preferred embodiment, the carrier sheet is a fibre ply, and for example a fibre ply suitable for incorporation into a continuous fibre reinforced composite structure to provided an in plane reinforcement, and comprises: a two dimensional ply of primary fibres having a two dimensional plural array of secondary fibres extending outwardly of the plane of the ply, and in particular preferably having infiltrated therein, and in particular therethrough, a plural array of secondary fibres extending outwardly of the plane of the ply, into a third dimension in generally aligned manner and disposed across at least a major part of the surface thereof.

A fibre ply carrier sheet in accordance with this aspect of the invention may comprise primary fibres that are unidirectional, the ply for example comprising unidirectional tape with parallel fibres, or multidirectional, the ply for example comprising multidirectional such as bidirectional sheet in which fibres are arranged in plural directions, for example comprising woven, knitted, stitched, braided, non-crimp or non-woven sheet. Preferred features of the primary and secondary fibres will be understood with reference to the foregoing discussion of the first aspect of the invention.

A fibre ply carrier sheet in accordance with this aspect of the invention may thus comprise a reinforcing ply of generally conventional design.

Additionally or alternatively a fibre ply carrier sheet may comprise a carrier scrim having as its primary purpose the support of the secondary fibre array to provide out of plane reinforcement when interleaved with primary fibre reinforcing plies of generally conventional design in an assembled composite structure. Such a carrier scrim might for example comprise very light weight woven or knitted materials in which the secondary fibres are carried and for example into which the secondary fibres are infiltrated.

Additionally or alternatively a fibre ply carrier sheet may comprise a polymer sheet material which can be incorporated into or onto the surface of a matrix comprising laminar primary fibre reinforcing plies of generally conventional design to provide out of plane reinforcement in an assembled composite structure. For example a polymer sheet material may comprise a film adhesive, for example comprising a layer of cast or rolled out curable resin film of a desired weight, having a plural array of secondary fibres extending outwardly of the plane of the film, into a third dimension in generally aligned manner and disposed across at least a major part of the surface thereof. The film adhesive may be combined with a fibre carrier layer in familiar manner, for example carried on a light weight woven or knitted fibre layer to allow handling of the film and to create gauged thickness in an assembled joint (i.e. when bonded together the two parts with a carrier in the adhesive will have a glueline thickness defined by the carrier which may for example be gauged at between 0.125 and 0.250 mm).

Plural secondary ply structures in accordance with any or all of these alternatives may be incorporated into a laminate and/ or at a joint interface of a CFRC having plural layers of primary fibre ply reinforcement to give secondary reinforcement out of the plane of the primary plies in accordance with the first aspect of the invention.

In accordance with a further aspect of the invention, a method of preparing a secondary reinforcing ply for use in a CFRC comprises the steps of:
providing a carrier layer of sheet material and preferably a fibre ply of primary fibre material;
introducing to and preferably through the carrier layer, for example in the case where the carrier layer is a fibre ply, by infiltrating into the gaps between the primary fibres, a plural array of secondary fibres extending outwardly of the plane of the carrier layer and disposed across at least a major part of the surface thereof.

The method is thus a method of preparing a reinforcing carrier ply in accordance with the second aspect of the invention set out hereinabove, and preferred features of the method will be appreciated by analogy.

The secondary fibres are in particular generally aligned and in a generally evenly spaced array. The process of producing a generally aligned structure of fibres is not necessarily pertinent to the invention. However, spray alignment processes have been found particularly effective at infiltrating fibres into a carrier layer in a manner that preserves a reasonable degree of alignment into the third dimension.

In a more complete aspect of the method, comprising a method of preparing a composite material in accordance with the first aspect of the invention, the method comprises the steps of:
preparing a plurality of secondary carrier plies in the manner above described:
optionally further, preparing a plurality of primary reinforcing fibre plies comprising two dimensional primary fibre ply structures without such secondary fibres;
laying up a plurality of the plies (that is, of secondary carrier plies and primary reinforcing fibre plies in appropriate combination for desired final properties) in generally parallel spaced manner in conjunction with a suitable precursor of a matrix material, and for example a curable matrix material;
and processing the same for example by curing the matrix material to form a fibre reinforced composite material.

The matrix material and the forming process may be any conventionally known material and process. For example, the method may comprise laying up a plurality of prepreg plies in the manner above described in conjunction with interleaved film adhesive. Alternatively, the method may comprise using a cast adhesive. The adhesive is cured in suitable known manner, for example via a resin bonding process, to produce a composite material in accordance with the first aspect of the invention.

More completely, the method may be a method of fabricating a composite structure having areas of high stress/ high delamination tendency, and comprises the provision of carrier plies having secondary reinforcement in the manner above described at such areas of high interlaminar stress/ delamination tendency. The carrier plies are in particular preferably applied as a secondary material, for example as part of the structural assembly stage of a laminate, or at the joint assembly stage.

The invention will now be described with reference to Figures 1 to 4 of the accompanying drawings, which illustrate the principals and embodiment of the invention by way of example only, though not by way of limitation, in which figures:
- Figure 1 is a schematic representation of a section through a T joint between two laminar CFRC structures, modified to embody the principles of the invention;
- Figure 2 is a section through a carrier ply with secondary reinforcing fibres in accordance with an embodiment of the invention;
- Figure 3 illustrates a laid up laminar structure prior to consolidation incorporating layers illustrated in Figure 2 to provide out of plane reinforcement, shown in general view in Figure 3a, and with an inset of the out of plane reinforcement in Figure 3b;
- Figure 4 illustrates in section a consolidated processed laminate structure derived from Figure 3.

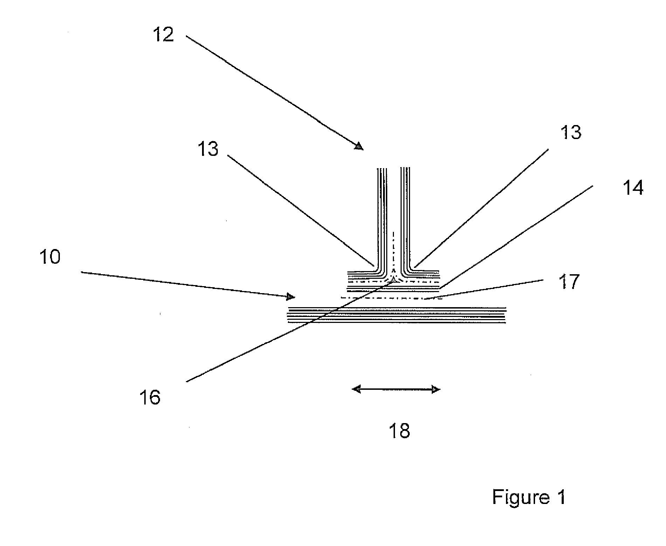

Figure 1 is a schematic illustration of a joint between two carbon fibre reinforced laminar formations, such as might for example comprise a spar joint in an aerospace structure. The illustrated joint comprises a spar 12 to skin 10 joint. To allow the spar 12 to be joined to the skin component 10 a relatively large footprint area 18 is required to provide a suitable interface surface to achieve a satisfactory bond with the skin. To form the footprint area 18, the spar is provided with a laminar foot formation 14 and laminar transition formation 13 on each side of the spar upright that curves progressively outwardly until the laminar reinforcements in each formation 13 extend approximately parallel to those of the foot 14.

Voids are created in the structure. In the prior art these are infilled, for example with curable resin and/ or additional fibre reinforcement which in prior art known joint systems may be stitched, stapled or otherwise mechanically engaged with the spar 12 and/ or skin 10 to prevent through-thickness splits. Such secondary mechanical reinforcement adds complexity to the joint fabrication process, and does not necessarily eliminate the problem posed by high delamination stresses occurring in particular parts of the joint. The areas 16 are particularly susceptible areas in this regard. The relatively limited reinforcement provided out of plane in the third dimension in conventional CRFCs, leading to fracture by delamination and associated mechanisms, can be a particular problem in these areas.

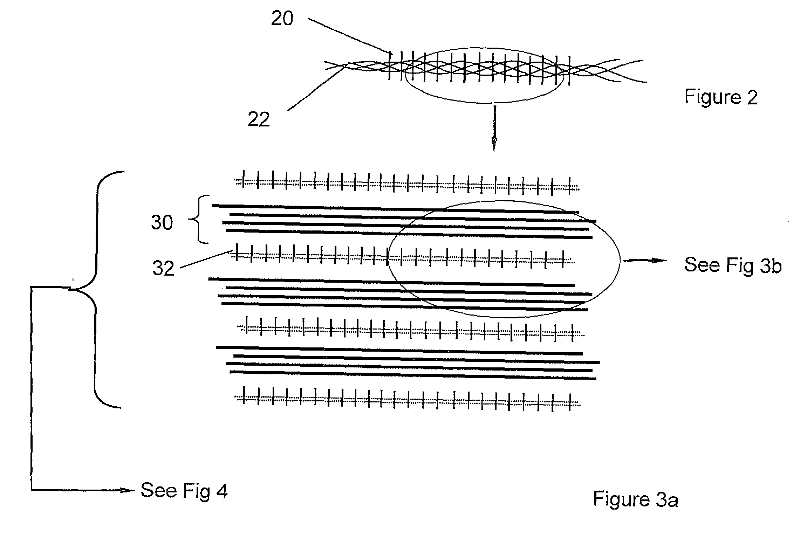

Consequently, carrier plies in accordance with the invention carrying secondary fibres (see figures 2 to 4) are introduced, or introduced in greater proportion, in such areas of high stress where delamination is likely to be a problem. For example, a 6 mm to 7 mm sheet might include 60 to 70 laminar layers of fibre plies in matrix material. It might be appropriate to incorporate plies in accordance with the invention in the top 10 layers of such a structure.

Thus, in figure 1, carrier plies in accordance with the invention carrying secondary fibres are introduced in layers 16 within the joint structure. They may also be introduced at the interface 17. Additionally or alternatively, adhesive may be used at the interface 17. The carrier ply material could also be interleaved if necessary into the skin and / or detail parts of this or similar joint configurations.

Figure 2 illustrates a section through a reinforcing fibre ply comprising an embodiment of carrier ply in accordance with the invention and suitable for incorporation into a composite structure such as that illustrated in Figure 1 which comprises a matrix material, for example of a curable resin composition, and plural plies of fibre reinforcement to form a continuous fibre reinforced composite material. A carrier ply as illustrated in Figure 2 is suitable for use in such a material such that on completion of processing it is incorporated into the processed laminate or joint interface in which the fibre ply of Figure 2 contributes reinforcement out of the plane of the ply into a third dimension.

The carrier ply illustrated in Figure 2 comprises a fibre layer carrier material 22. In the illustrated embodiment the carrier material is a carrier scrim of lightweight fibre material having as its primary purpose the provision of a support structure that supports the secondary fibres in the desired generally aligned vertical manner. Alternative carrier materials, such as materials which are additionally full in plane reinforcement layers, or layers which are film adhesive layers, optionally with an associated fibre support layer, can be envisaged.

Through the fibre layer of the carrier ply secondary fibres in plural array are infiltrated in generally aligned manner so as to extend generally perpendicularly to the sheet 22 across a major part of its extent in generally evenly spaced manner. These may be infiltrated for example by a spray process. Spray technology is capable of producing a suitable aligned fibre disposition. Other processes capable of producing a similar generally aligned fibre disposition might be considered.

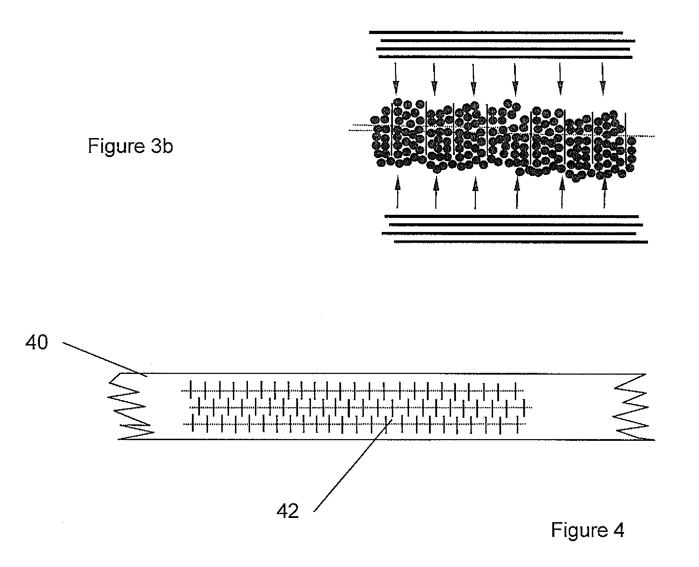

Figure 3 illustrates in cross section how a material as illustrated in Figure 2 might be incorporated into a CFRC laminate structure, for example at the fabrication stage, in order to provide an out of plane reinforcement, for example at a joint interface such as that illustrated in Figure 1.

A structure is laid up comprising multiple layers of partial ply lamination 30 of conventional CFRC fibre ply/matrix material, for example comprising a plurality of prepreg plies of fibre composite material and curable film matrix material. Interleaved with these, at least in a zone to be reinforced, are provided a plurality of reinforcing plies 32 carrying secondary reinforcing fibres out of the general plane of the laminate in the manner illustrated in Figure 3a. Specific detail of this is illustrated in the inset of Figure 3b.

As this material is processed in a suitable conventional manner, for example by curing the matrix material, the secondary reinforcement is consolidated into the processed laminate to improve out of plane properties by projecting into the interlaminar matrix material.

The resultant processed laminate structure is illustrated schematically in Figure 4. The structure of Figure 4 might in particular for example be suitable for use at areas of high delamination stress at a joint interface such as is illustrated in Figure 1.

## Claims

1. A secondary ply structure suitable for incorporation into a continuous fibre reinforced composite structure comprising a matrix material and a plurality of fibre ply reinforcing structures; the secondary ply comprising a carrier sheet having a two dimensional plural array of secondary fibres extending outwardly of the plane of the sheet into a third dimension in generally aligned manner and disposed across at least a major part of the surface thereof.

2. A secondary ply structure in accordance with claim 1 wherein the carrier sheet is a fibre ply comprises a two dimensional ply of primary fibres, and having a two dimensional plural array of secondary fibres extending outwardly of the plane of the ply into a third dimension in generally aligned manner and disposed across at least a major part of the surface thereof.

3. A composite structure comprising:
a matrix material; and
a plurality of fibre plies disposed substantially within the matrix material in generally parallel spaced manner; and
at least one secondary ply comprising a carrier sheet having a two dimensional plural array of secondary fibres extending outwardly of the plane of the sheet into a third dimension in generally aligned manner and disposed across at least a major part of the surface thereof.

4. A composite structure in accordance with claim 3 wherein at least some of the fibre plies comprise such secondary plies provided with a two dimensional plural array of secondary fibres extending outwardly of the plane of the ply and disposed across at least a major part of the surface thereof.

5. A structure in accordance with any preceding claim wherein the secondary reinforcing fibres are arrayed across a major part of the extent of the secondary ply in a generally evenly distributed array.

6. A structure in accordance with any preceding claim wherein the secondary fibres project outwardly such that at least a substantial proportion of them extend generally perpendicularly to the secondary ply in aligned manner.

7. A structure in accordance with any preceding claim wherein secondary fibres project outwardly from both sides of the secondary ply.

8. A structure in accordance with claim 7 wherein the secondary ply is a fibre ply and a secondary fibre extends through a fibre ply to so project outwardly from both sides thereof, being inflitrated through the carrier ply so as to be retained therein in such manner that the structure of the primary fibres of the carrier ply is unmodified.

9. A structure in accordance with claim 6 wherein a secondary fibres comprise short length fibres having a mean length between 0.25 mm and 3 mm.

10. A structure in accordance with any preceding claim wherein the secondary fibres have a mean diameter of between 6 µm and 30 µm.

11. A structure in accordance with any preceding claim comprising a plurality of secondary plies disposed substantially within a matrix material, wherein at least some pairs of adjacent secondary plies have secondary fibres in accordance with any preceding claim projecting from respective opposing surfaces of each ply into the matrix material between them to such an extent as to partly enmesh.

12. A method of preparing a secondary reinforcing ply for use in a CFRC comprising the steps of:
providing a carrier layer of sheet material;
introducing to the carrier layer a plural array of secondary fibres extending outwardly of the plane of the layer and disposed across at least a major part of the surface thereof.

13. A method in accordance with claim 12 wherein the carrier layer is a fibre ply and the array of secondary fibres is introduced through the ply by infiltrating secondary fibres into the gaps between the primary fibres.

14. A method in accordance with claim 12 or 13 wherein the array of secondary fibres is introduced by a spray alignment process.

15. A method of preparing a composite material comprising the steps of:
preparing a plurality of secondary reinforcing plies in accordance with the method of one of claims 12 to 14;
optionally preparing a plurality of primary reinforcing fibre plies comprising two dimensional primary fibre ply structures without such secondary fibres;
laying up the plurality of fibre plies in generally parallel spaced manner in conjunction with a suitable precursor of a matrix material, and for example a curable matrix material;
and processing the same to form a fibre reinforced composite material.
